# EUROPÄISCHE PATENTSCHRIFT

(11) **EP 0 814 554 B1**
(45) Veröffentlichungstag und Bekanntmachung des Hinweises auf die Patenterteilung: **31.03.2004**
(21) Anmeldenummer: 97109723.3
(22) Anmeldetag: 14.06.1997
(51) Int. Cl.: H02G 3/30, F16L 3/223

(54) **Vorrichtung zum Festlegen wenigstens eines Kabels oder Rohres auf einem Träger**
Fastening device for at least a cable or a pipe on a holder
Dispositif d'attache d'au moins un câble ou un tuyau sur un support

(30) Priorität: 19.06.1996 DE 19624335; 26.07.1996 DE 19630076
(43) Veröffentlichungstag der Anmeldung: 29.12.1997
(73) Patentinhaber: ABB PATENT GmbH, 68526 Ladenburg (DE)
(72) Erfinder: Bayer, Bardo, 68642 Bürstadt (DE); Kratschmar, Rüdiger, 68542 Heddesheim (DE); Way, Derek, 67273 Weisenheim am Berg (DE)
(74) Vertreter: Miller, Toivo

(56) Entgegenhaltungen:
- DE-A- 3 014 697
- GB-A- 749 972
- US-A- 4 960 253

## Beschreibung

Die Erfindung betrifft eine Vorrichtung zum Festlegen wenigstens eines Kabels oder Rohres auf einem Träger in einer Installationsanlage, Schaltanlage bzw. im Installationsbereich.

Solche Vorrichtungen werden meist durch Kabel- oder Rohrschellen gebildet, mit denen die Kabel oder Rohre auf Profilschienen fixiert werden können (Siehe DE-A-3014697). Wenn beispielsweise Kabel unterschiedlicher Phase nebeneinander am Kabelträger befestigt werden sollen, dann besteht das Problem, daß beispielsweise im Kurzschlußfall Querkräfte auftreten können, mit denen die Kabelschellen nur geringfügig belastet werden können. Wenn in einem solchen Fall die Schellen auf den Profilschienen verrutschen, können Beschädigungen an den Kabeln und an angeschlossenen Geräten auftreten. Da außerdem die Kabelschellen und den Träger durchfließende Wirbelströme entstehen, werden Stromwärmeverluste erzeugt, die die Kabel und die Umgebung der Kabel thermisch belasten. Ähnliches gilt auch bei der Verlegung von Rohren; insbesondere von flexiblen Rohren, die von Flüssigkeiten durchströmt werden, die unter Druck stehen. Wenn im folgenden von "Kabeln" die Rede ist, fallen unter diesen Begriff auch Rohre, z. B. flexible Rohre.

Die GB-A- 749 972 und US-A- 4 960 253 beschreiben jeweils eine Vorrichtung zum Festlegen wenigstens eines Kabels oder Rohres auf einem Träger mittels eines Spannbandes.

Aufgabe der Erfindung ist es, eine kurzschlußfeste Verlegung von Kabeln oder von Rohren so zu gestalten, daß eine Beschädigung der Kabel und der angeschlossenen Geräte oder der Rohre sicher verhindert und - bei Kabeln - Stromwärmeverluste vermindert oder vermieden werden.

Diese Aufgabe wird bei einer Vorrichtung zur Kabelbefestigung nach dem Oberbegriff des Anspruchs 1 durch dessen kennzeichnende Merkmale gelöst. Vorteilhafte Ausgestaltungen sind in weiteren Ansprüchen angegeben.

Gemäß einer Ausfuhrung der Erfindung besitzt der Träger mehrere Ausnehmungen in gleichem Abstand zueinander. Zur Festlegung der Kabel ist ein Spannteil vorgesehen, welches einen hutprofilartigen Querschnitt aufweist, wobei wenigstens ein Steg durch eine Ausnehmung am Kabelträger herausragt. Weiterhin ist ein Spannband vorgesehen, welches um die Kabel und um den Kabelträger herumgelegt ist, wobei das Spannband die außerhalb der Kabel benachbart befindlichen Ausnehmungen durchgreift. Mittels des Spannteils, dessen Stege von außerhalb auf den Spannbandbereich zwischen zwei Kabeln aufgesetzt sind, wird dieser Bereich zwischen.den beiden Kabeln gegen die obere Fläche des Kabelträgers gedrückt, wodurch die nebeneinander befindlichen Kabel gegen die Oberfläche des Kabelträgers verspannt werden.

Es besteht die Möglichkeit, die Kabel einzeln oder in Gruppen mit zwei, drei oder vier Kabeln auf diese Weise mittels eines einzigen Spannteils zu verspannen; dabei besitzt das Spannteil zwei U-förmige Stege zur Befestigung von bis zu drei Kabeln; bei vier Kabeln, also wenn zusätzlich zu den drei Phasenleiterkabeln ein Neutralleiterkabel hinzukommt, besitzt das Spannteil drei U-förmige Stege, die durch die entsprechenden Ausnehmungen hindurchgreifen und das Spannband in den Bereichen zwischen den Kabeln gegen den Kabelträger ziehen bzw. drücken.

Eine weitere Ausführung der Erfindung umfaßt einen Träger, der aus Metall oder einem anderen Werkstoff entsprechender Festigkeit besteht, vorzugsweise mit U-Profil, und auf dessen Hauptfläche ein oder mehrere Kabel beabstandet nebeneinander auflegbar und befestigbar sind Hinter dem Kabelträger, d. h. auf der der Kabelauflagefläche abgewandten Seite des Trägers ist ein im wesentlichen flaches Spannteil beabstandet zum Träger angeordnet. Sowohl der Träger, als auch das Spannteil weisen Ausnehmungen auf, durch die ein geschlossenes Spannband mäanderförmig geschleift ist. Das Spannband ist auch um die zu befestigenden Kabel geführt. Eine Straffung des Spannbandes zur Fixierung der Kabel erfolgt mittels Verstellelementen, vorzugsweise Schrauben, die in Gewindebohrungen des Kabelträgers eingeschraubt sind und die auf das Spannteil drücken. Mit ihrer Hilfe ist er Abstand zwischen Träger und Spannband so vergrößerbar, daß das Spannband gestrafft ist, wodurch die Kabel auf den Träger gedrückt und gegen seitliches Verrutschen gesichert werden.

Die Anordnung des Spannteils hinter dem Träger, die Möglichkeit zum Verschluß des Spannbandes auf der gut zugänglichen Vorderseite des Trägers, sowie die Betätigung der Verspannelemente von der Vorderseite her führen zu einer einfachen Montage.

Anhand der Zeichnung, in der zwei Ausführungsformen der Erfindung dargestellt sind, sollen die Erfindung, weitere vorteilhafte Ausgestaltungen und Verbesserungen und weitere Vorteile näher erläutert und beschrieben werden.

Es zeigen:
- Fig. 1: eine Aufsicht auf eine erste Ausgestaltung eines Kabelträgers mit verlegten Kabeln,
- Fig. 2: eine Schnittansicht gemäß Schnittlinie II - 11 der Fig. 1,
- Fig 3: eine Schnittansicht gemäß der Schnittlinie III - III der Fig. 1,
- Fig. 4: eine Anwendung der Erfindung zum Verspannen lediglich eines Kabels,
- Fig. 5: eine Aufsicht auf eine weitere Ausgestaltung eines Kabelträgers mit darauf befestigten Kabeln,
- Fig 6: eine Schnittansicht gemäß Schnittlinie VI-VI der Fig. 5, und
- Fig. 7: eine Schnittansicht gemäß Schnittlinie VII-VII der Fig. 5.

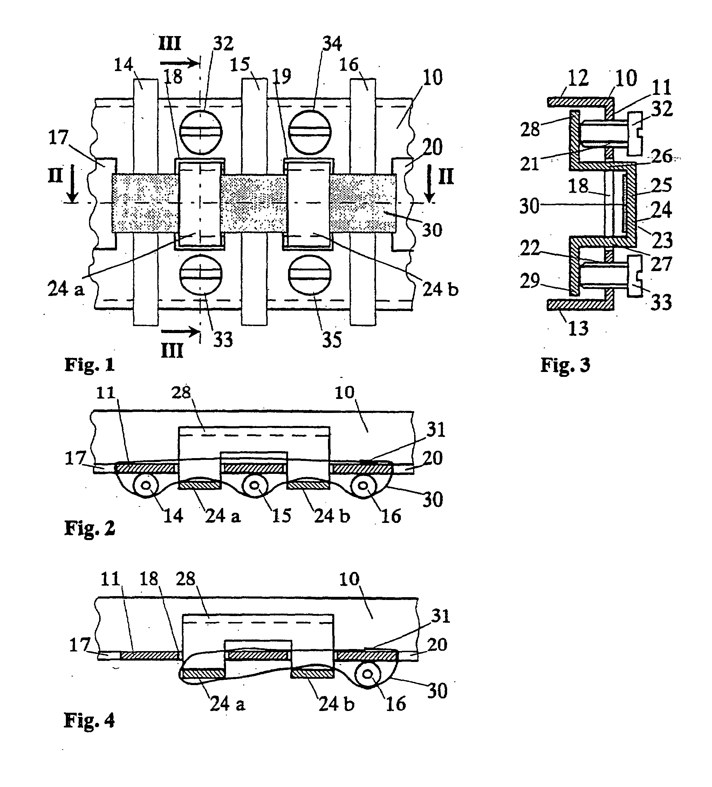

Es sei Bezug genommen auf die Fig. 1 bis 4.

Auf einem langgestreckt rechteckigen Kabelträger 10, der wie aus Fig. 3 ersichtlich ist, eine U-Form aufweist, mit einem Trägersteg 11 und zwei Trägerschenkeln 12 und 13, sind drei Kabel 14, 15 und 16 nebeneinander und in einem vorgegebenen Abstand zueinander angeordnet. Diese drei Kabel gehören zu einer dreiphasigen Kabelleitung.

Der Trägersteg 11 ist mit rechteckigen Ausnehmungen 17, 18, 19, 20 ausgestattet, die in gleichem Abstand zueinander angeordnet sind und deren längere Seiten quer zur Längserstreckung des Kabelträgers 10 ausgerichtet sind. Mit anderen Worten: Die längeren Seiten der rechteckförmigen Ausnehmungen 17 bis 20 verlaufen senkrecht zu den Trägerschenkeln 12 bzw. 13.

Beidseitig, also neben den Schmalseiten der rechteckförmigen Ausnehmungen 17 bis 20, befinden sich Gewindebohrungen 21 und 22 (siehe Fig. 3). Die Vorrichtung besitzt weiterhin ein Spannteil, weiches in der Seitenansicht (Fig. 3) bzw. im Schnitt gemäß Schnittlinie III - III eine Hutprofilform aufweist, mit einem U-förmigen Abschnitt 24 mit einem Spannteilsteg 25 und beidseitig angeformt Spannteilschenkel 26 und 27, an deren freien Enden L-förmig angeformte Schenkel 28 und 29 anschließen, die in einer Ebene liegen und parallel zu dem Steg 25 verlaufen. Aus der Fig. 1 in Verbindung mit 2 ist ersichtlich, daß das Spannteil 23 zwei U-Formen 24a und 24b aufweist, die so bemessen sind, daß sie durch die Ausnehmungen 18 und 19 hindurchgreifen. Man kann auch sagen, daß die U-Formen 24a und 24b mittels der Schenkel 28 und 29 und mittels eines Teilbereiches der Schenkel 26 und 27 miteinander verbunden sind.

Die Vorrichtung umfaßt ein Spannband 30, welches aus hochreißfestem, dehnbarem, Isolierendem Kunststoff besteht und so angeordnet ist, daß es durch die Ausnehmungen 17 und 20. über die Kabel 14 bis 16 und unterhalb der Schenkelstege 24a und 24b hindurchgefädelt ist, wobei die Enden bei 31 sich überlappend miteinander fest verbunden sind. Durch Verwendung des Spannbandes 30 aus isolierendem Kunststoff werden Wirbelströme und damit Stromwärmeverluste vermieden.

Mittels Schrauben 32 und 33 bzw. 34 und 35, die in die Gewindebohrungen 21 und 22 eingeschraubt sind, wird der Abstand der Schenkel 28 und 29 von dem Trägersteg 11 vergrößert. Dadurch werden die Abschnitte des Spannbandes 30, die zwischen den Kabeln 14 und 15 bzw. 15 und 16 liegen, von den Stegen 24a und 24b gegen den Trägersteg 11 gedrückt, so daß die Kabel, wie aus Fig. 2 ersichtlich ist, gegen den Trägersteg verspannt werden.

Weil sich die U-Formen 24 mit den Stegen 24a und-24b außerhalb des geschlossenen Spannbandes befinden und einen bestimmten Abstand zwischen den Kabeln aufweisen, und weil die die Kabel umfassenden Spannbandabschnitte zusätzlich eine seitliche Bewegung der Kabel 14 bis 16 nicht zulassen, sind die Kabel 14 bis 16 auch dann ausreichend fixiert, wenn ein Kurzschlußstrom über die drei Phasenleiter fließt.

Wenn anstatt dreier Kabel noch ein N-Leiter auf dem Kabelträger 10 fixiert werden muß, dann wird ein Spannteil verwendet, bei dem drei Stege bzw. U-Formen 24 vorgesehen sind. Die Struktur ist die gleiche wie die in der Fig. 2: lediglich ist noch ein weiteres Kabel vom Spannband umfaßt.

Gemäß Fig. 4 kann auch nur ein Kabel 16 gegen den Kabelträger 11 verspannt werden. Dabei umschlingt das Spannband 30 das Kabel 16, läuft unter dem Steg 24 und über dem Steg 24a und um diesen herum nach unten durch die Aussparung 18 in den Bereich unterhalb des Kabelträgers und durch die Aussparung 20 hindurch wieder zum Kabel 16.

Die Breite der Aussparung quer zur Längserstreckung des Kabelträgers 10 ist so bemessen, daß das Spannband 30 hindurchpaßt bzw. umgekehrt.

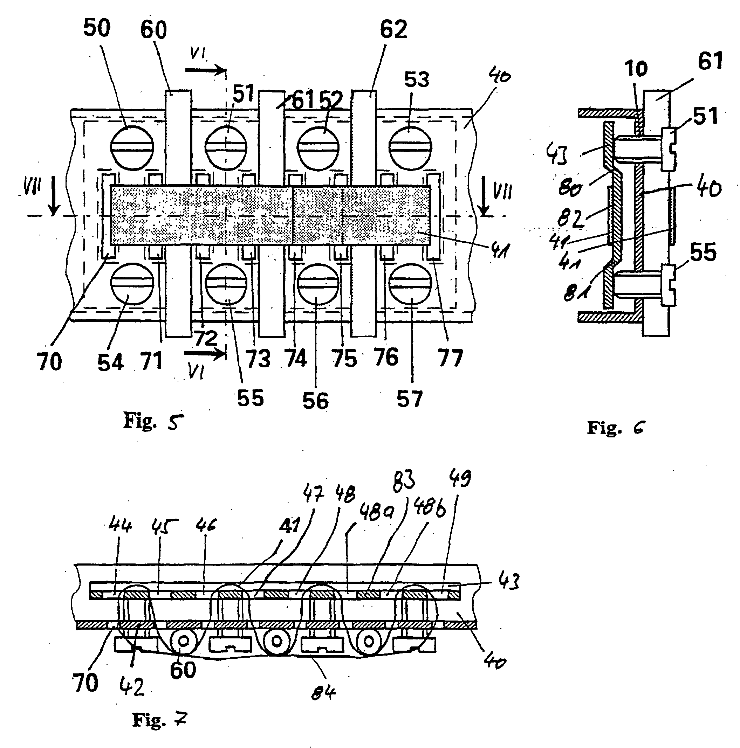

Die Fig. 5 bis 7 sind im Zusammenhang zu betrachten, da sie jeweils unterschiedliche Einzelheiten einer Variante der Vorrichtung zur Kabelbefestigung zeigen.

Fig. 5 zeigt eine Aufsicht auf einen Kabelträger 40, der aus einem metallischen Profilstrang mit U-Profil hergestellt ist. Auf der als Vorderseite bezeichneten Hauptebene liegen beabstandete Kabel 60, 61, 62 auf. Der Kabelträger 40 weist in einem vorzugsweise gleichen Abstand zueinander angeordnete rechteckförmige Ausnehmungen 70 bis 77 auf. Die längere Seite der Ausnehmungen 70 bis 77 verläuft quer zur Längserstreckung des Kabelträgers 40. Die Ausnehmungen 70 bis 77 sind ausreichend groß dimensioniert, um mühelos ein Spannband 41 hindurchführen zu können. Zwischen zwei Ausnehmungen, z. B. 71 und 72 verbleiben jeweils Stege 42 (vgl. Fig. 6), auf denen jeweils die Kabel 60 bis 62 aufliegen. Die Reihe der Ausnehmungen wird am Anfang und Ende durch Ausnehmungen 70, 77 abgeschlossen, die nicht einem Kabel benachbart sind, so daß im Fall von drei Kabeln 60 bis 62 insgesamt acht Ausnehmungen 70 bis 77 vorhanden sind. In Fig. 5 sind außerdem die Köpfe von acht Schrauben 50 bis 57 dargestellt. Die Schrauben 50 bis 57 sind als Verstellelemente angeordnet und durch mit Gewinde versehene Bohrungen 10 im Kabelträger 1 (vgl. Fig. 7) eingeschraubt

Wie aus den Fig. 6 und 7 deutlich wird, drücken die gleichmäßig auf der Hauptfläche verteilten Schrauben 50 bis 57 auf ein Spannteil 43. Das Spannteil 43 ist prinzipiell ein rechteckförmiges Blechteil, das Spannteil-Ausnehmungen 44 bis 49 aufweist. Die Anzahl und der gegenseitige Abstand der Spannteil-Ausnehmungen 44 bis 51 stimmt mit der Anzahl und dem Abstand der Ausnehmungen 70 bis 77 des Kabelträgers 40 überein Die Abmessungen der Spannteil-Ausnehmungen 44 bis 49 wird bevorzugt etwas größer als die Abmessungen der Ausnehmungen 70 bis 77 des Kabelträgers 40 gewählt, um ein Hindurchschleifen des Bandes 41 zu erleichtern. Das Spannteil 43 weist vorteilhaft Kröpfungen 80, 81 auf zur Schaffung von vertieften Auflageflächen 82 für das Band 41, wodurch eine Justage während der Montage erleichtert ist. Zwischen den Spannteil-Ausnehmungen 44 bis 49 verbleibende Stege sind mit Bezugszeichen 83 versehen.

Wie insbesondere aus Fig. 6 ersichtlich ist, ist das Spannband 41 mäanderförmig in der Vorrichtung geführt. Zur Montage wird das zunächst offene Band 41 beispielsweise von der äußersten Ausnehmung 70 beginnend von der Vorderseite her durch die hintereinanderliegende Ausnehmungen 70, 30 des Kabelträgers 40 und des Spannteils 43 gesteckt, dann um den benachbarten Steg 83 geschlungen und durch die in der Reihenfolge nächsten Ausnehmungen 45 wieder zur Vorderseite des Kabelträgers 40 geführt. Anschließend wird das Spannband 41 um das erste Kabel 60 und durch das nächste Ausnehmungspaar 72, 46 zur Rückseite des Spannteils 43 geführt und das Durchschleifen des Bandes 41 so lange weitergeführt, bis der Bandanfang an der letzten Ausnehmung 77 des Kabelträgers 41 an der Vorderseite zur Verfügung steht zur Verbindung von Bandanfang und Bandende an einer Stoßstelle 84.

Es ist vorteilhaft, das Band 41 an der Stoßstelle 84 überlappen zu lassen und z.B. durch Verschweißen oder mittels einer Bandschelle zu verbinden. Das Band kann aus einem Kunststoff, insbesondere aus einem glasfaserverstärkten Material bestehen.

Die Montage einer solchen Kabelbefestigungsvorrichtung wird durch Spannen des Spannbandes 41 abgeschlossen, wobei durch weiteres Eindrehen der Schrauben 50 bis 57 der Abstand zwischen Spannteil 43 und Kabelträger 40 vergrößert wird, sich das Band strafft und die Kabel 60 bis 62 am Kabelträger 40 fixiert werden.

Wie aus den Fig. 5 und 6 deutlich wird, ist durch die Art der Bandführung sichergestellt, daß die Kabel 60 bis 62 am vorgesehenen Ort fixiert sind, auch für den Fall, daß Kräfte in Querrichtung wirken.

## Patentansprüche

1. Vorrichtung zum Festlegen wenigstens eines Kabels oder Rohres (14-16, 60-62) einem eine ebene Fläche aufweisenden Träger (10, 40) in einer Installationsanlage, Schaltanlage bzw. im Installationsbereich, **dadurch gekennzeichnet, daß** der Träger (10, 40) mehrere Ausnehmungen (18, 19; 70 bis 77) in gleichen Abstand zueinander aufweist, daß ein geschlossenes Spannband (30, 41) vorgesehen ist, welches um die Kabel (14 bis 16); 60 bis 62) oder Rohre und um den Träger (10, 40), je zwei Ausnehmungen (18, 19; 70 bis 77) durchgreifend, herumgeschlungen ist, daß ein Spannteil (24, 43) vorgesehen ist, welches Stege (24a, 24b; 83) aufweist, um die das Spannband (30, 41) geschlungen ist, wobei die Spannband-Enden an einer Stoßstelle (84) verbunden sind, und daß das Spannteil (24, 43) mittels Verstellelementen (32 bis 35; 50 bis 57) bezogen auf den Träger (10, 40) so verstellt wird, daß die im Bereich zwischen den Kabeln (14 bis 16; 60 bis 62) oder Rohren gegen das Spannband (24, 43) anliegenden Stege (24a, 24b; 83) diese zwischen den Kabeln (14 bis 16; 60 bis 62) oder Rohren befindlichen Spannbandbereiche gegen die Kabel (14 bis 16; 60 bis 62) oder Rohre ziehen.

2. Vorrichtung nach Anspruch 1, **dadurch gekennzeichnet, daß** das Spannteil (23) einen hutprofilartigen Querschnitt aufweist, dessen U-förmiger Bereich eine Aussparung aufweist, so daß zwei U-förmige Teilbereiche gebildet sind, deren Abmessungen den Abmessungen der Ausnehmungen (17 bis 20) entsprechen, so daß sie durch die Ausnehmungen (17 bis 20) hindurchgreifen können.

3. Vorrichtung nach Anspruch 2, **dadurch gekennzeichnet, daß** das Spannteil zwei in einer Ebene und in Abstand zueinander liegende Schenkel (28, 29) aufweist, und daß an den Schenkeln (28, 29) wenigstens ein U-förmiger Abschnitt (23) angeformt ist.

4. Vorrichtung nach Anspruch 1, **dadurch gekennzeichnet, daß** das Spannteil (43) ein rechteckförmiger Blechteil ist, das Ausnehmungen (44 bis 49) aufweist, und vom Träger (40) beabstandet angeordnet ist, wobei der Abstand zwischen Träger (40) und Spannteil (43) mittels Verstellelementen (50 bis 57) veränderbar ist, und daß das Spannband (41) mäanderförmig jeweils durch die Ausnehmungen (70 bis 77) des Trägers (40) und diejenigen (44 bis 49) des Spannteils (43) geführt ist, dabei abwechselnd um zwischen Ausnehmungen des Spannteils (43) verbliebene Stege (83) bzw. um auf Stegen (42) des Trägers (41) auf dessen Stegen (42) aufliegende Kabel (60 bis 62) oder Rohre geschlungen ist.

5. Vorrichtung nach Anspruch 1, **dadurch gekennzeichnet, daß** das Spannteil (43) ein mit Kröpfungen (0, 81) versehen ist zur Schaffung vertiefter Auflageflächen für das Spannband (41).

6. Vorrichtung nach einem der vorherigen Ansprüche, **dadurch gekennzeichnet, daß** die Verstellelemente Schrauben (32 bis 35; 50 bis 57) sind, die von der Seite des Trägers (10, 40), auf dem die Kabel (14 bis 16; 60 bis 62) oder Rohre aufliegen, in eine Gewindebohrung im Träger (10, 40) einschraubbar sind und sich gegen das Spannteil (24, 43) legen, so daß mit den Schrauben der Abstand zwischen dem Träger und dem Spannteil.verändert wird.

7. Vorrichtung nach einem der vorigen Ansprüche, **dadurch gekennzeichnet, daß** das Spannband (30, 41) aus hochreißfestem, dehnbaren, isolierendem Kunststoff, z. B. aus glasfaserverstärktem Material besteht, dessen freie Enden überlappend ausgebildet und miteinander fest verbunden sind.

8. Vorrichtung nach Anspruch 7, **dadurch gekennzeichnet, daß** die Enden des Spannbandes (30, 41) miteinander verschweißt oder mittels einer Bandschelle miteinander verbunden sind.

9. Vorrichtung nach einem der vorigen Ansprüche, **dadurch gekennzeichnet, daß** der Abstand und die Abmessungen der Ausnehmungen im Träger (10, 40) und im Spannteil (23, 43) abhängig sind von dem Durchmesser der Kabel oder Rohre und den Abmessungen des Spannbandes (30, 41).

10. Vorrichtung nach einem der vorigen Ansprüche, **dadurch gekennzeichnet, daß** mittels des Spannbandes (30, 41) weitere Kabel oder Rohre den Kabeln oder Rohren zugeordnet und mit diesen mittels des Spannbandes (30, 41) verspannbar sind.

## Claims

1. An apparatus for fixing at least one cable or pipe (14 to 16; 60 to 62) in a carrier (10, 40) having a plane surface in a wiring system, switchgear unit or in the wiring area, **characterized in that** the carrier (10, 40) comprises several recesses (18, 19; 70 to 77) at the same distance from each other, that a closed clamp band (30, 41) is provided which is wrapped around the cables (14 to 16; 60 to 62) or pipes and around the carrier (10, 40) by grasping through two recesses each (18, 19; 70 to 77), that a clamp part (24, 43) is provided which comprises webs (24a, 24b; 83) around which the clamp band (30, 41) is wrapped, with the clamp band ends being connected at a joint (84), and that the clamp part (24, 43) is adjusted by means of adjusting elements (32 to 35; 50 to 57) relative to the carrier (10, 40) in such a way that the webs (24a, 24b; 83) resting on the clamp band (24, 43) in the region between the cables (14 to 16; 60 to 62) or pipes pull said clamp band regions situated between the cables (14 to 16; 60 to 62) or pipes against the cables (14 to 16; 60 to 62) or pipes.

2. An apparatus as claimed in claim 1, **characterized in that** the clamp part (23) has a cross section in the manner of the profile of a hat whose U-shaped region has a recess, thus forming two U-shaped partial regions whose dimensions correspond to the dimensions of the recesses (17 to 20), so that they can grasp through the recesses (17 to 20).

3. An apparatus as claimed in claim 2, **characterized in that** the clamp part comprises two legs (28, 29) situated in a plane and at a mutual distance from each other and that at least one U-like section (23) is shaped on the legs (28, 29).

4. An apparatus as claimed in claim 1, **characterized in that** the clamp part (43) is a rectangular sheet-metal part comprising recesses (44 to 49) and is arranged to be spaced from the carrier (40), with the distance between carrier (40) and clamp part (43) being adjustable by means of adjusting elements (50 to 57), and that the clamp band (41) is guided in a meandering fashion through the recesses (70 to 77) of the carrier (40) and those of the clamp part (43), thereby being wrapped in an alternating fashion around webs (83) remaining between recesses of the clamp part (43) or around cables (60 to 62) or pipes resting on webs (42) of the carrier (41) on its webs (42).

5. An apparatus as claimed in claim 1, **characterized in that** the clamp part (43) is provided with offsets (0, 81) for creating recessed bearing surfaces for the clamp band (41).

6. An apparatus as claimed in one of the preceding claims, **characterized in that** the adjusting elements are screws (32 to 35; 50 to 57) which can be screwed into a threaded bore in the carrier (10, 40) from the side of the carrier (10, 40) on which the cables (14 to 16; 60 to 62) or pipes rest, and lay against the clamp part (24, 43), so that the distance between the carrier and the clamp part is changed with the screws.

7. An apparatus as claimed in one of the preceding claims, **characterized in that** the clamp band (30, 41) consists of extensible, insulating plastic material with high-rupture tenacity, e.g. of glass-fiber reinforced material, whose free ends are provided with an overlapping arrangement which are rigidly connected with each other.

8. An apparatus as claimed in claim 7, **characterized in that** the ends of the clamp band (30, 41) are welded together or are mutually connected by means of a band bracket.

9. An apparatus as claimed in one of the preceding claims, **characterized in that** the distance and the dimensions of the recesses in the carrier (10, 40) and in the clamp part (23, 43) depend on the diameter of the cables or pipes and the dimensions of the clamp band (30, 41).

10. An apparatus as claimed in one of the preceding claims, **characterized in that** further cables or pipes can be associated with the cables or pipes by means of the clamp band (30, 41) and can be clamped with the same by means of the clamp band (30, 41).

## Revendications

1. Dispositif d'attache d'au moins un câble ou d'un tuyau (14-16, 60-62) sur un support (10, 40) présentant une surface plane, dans un système de câblage, une installation de distribution d'électricité ou dans le domaine du câblage, **caractérisé en ce que** le support (10, 40) présente plusieurs évidements (18, 19; 70 à 77) situés à égale distance les uns des autres, **en ce qu'**il est prévu une bande de serrage (30, 41) fermée qui est disposée autour des câbles (14 à 16, 60 à 62) ou des tuyaux et du support (10, 40), en traversant chaque fois deux évidements (18, 19; 70 à 72), **en ce qu'**il est prévu un élément de serrage (24, 43) qui présente des barrettes (24a, 24b; 83), autour desquelles est disposée la bande de serrage (30, 41), les extrémités de la bande de serrage étant reliées l'une à l'autre au niveau d'un point de jonction (84), et **en ce que** l'élément de serrage (24, 43) est réglé, au moyen d'éléments de réglage (32 à 35; 50 à 57), par rapport au support (10, 40) de manière telle que les barrettes (24a, 24b; 83), qui sont appliquées contre la bande de serrage (24, 43) dans la région située entre les câbles (14 à 16; 60 à 62) ou les tuyaux, tirent ces portion de bandes, situées entre les câbles (14 à 16; 60 à 62) ou les tuyaux, contre lesdits câbles (14 à 16; 60 à 62) ou tuyaux.

2. Dispositif selon la revendication 1, **caractérisé en ce que** l'élément de serrage (23) présente une section de type profilé en chapeau dont la partie en forme de U comporte un évidement, de manière à former deux zones partielles en forme de U dont les dimensions correspondent à celles des évidements (17 à 20), de sorte qu'elles peuvent traverser lesdits évidements (17 à 20).

3. Dispositif selon la revendication 2, **caractérisé en ce que** l'élément de serrage comporte deux ailes (28, 29) situées dans un même plan, à distance l'une de l'autre, et **en ce qu'**au moins une portion (23) en forme de U est aménagée sur les ailes (28, 29).

4. Dispositif selon la revendication 1, **caractérisé en ce que** l'élément de serrage (43) est une pièce en tôle rectangulaire qui présente des évidements (44 à 49) et est placée à distance du support (40), la distance entre ledit support (40) et l'élément de serrage (43) pouvant être modifiée à l'aide d'éléments de réglage (50 à 57), et **en ce que** la bande de serrage (41) passe en forme de méandres chaque fois dans les évidements (70 à 77) du support (40) et dans les évidements (44 à 49) de l'élément de serrage (43), en étant disposée en alternance autour de barrettes (83), subsistant entre les évidements de l'élément de serrage (43), et de câbles (60 à 62) ou de tuyaux reposant sur des barrettes (42) du support (40).

5. Dispositif selon la revendication 1, **caractérisé en ce que** l'élément de serrage (43) est pourvu de coudes (80, 81), en vue de créer des surfaces d'appui en creux pour la bande de serrage (41).

6. Dispositif selon l'une quelconque des revendications précédentes, **caractérisé en ce que** les éléments de réglage sont des vis (32 à 35; 50 à 57) qui peuvent être vissées dans un trou taraudé du support (10, 40), depuis le côté du support (10, 40) sur lequel reposent les câbles (14 à 16; 60 à 62), et viennent en appui contre l'élément de serrage (24, 43), de sorte que les vis modifient la distance entre le support et l'élément de serrage.

7. Dispositif selon l'une quelconque des revendications précédentes, **caractérisé en ce que** la bande de serrage (30, 41) est en une matière plastique élastique, isolante, à haute résistance à l'arrachement, par exemple une matière renforcée par fibres de verre, dont les extrémités libres se chevauchent et sont liées solidement l'une à l'autre.

8. Dispositif selon la revendication 7, **caractérisé en ce que** les extrémités de la bande de serrage (30, 41) sont soudées l'une à l'autre ou reliées par une bride pour bande.

9. Dispositif selon l'une quelconque des revendications précédentes, **caractérisé en ce que** l'espacement et les dimensions des évidements du support (10, 40) et de l'élément de serrage (23, 43) sont fonction du diamètre des câbles ou tuyaux et des dimensions de la bande de serrage (30, 41).

10. Dispositif selon l'une quelconque des revendications précédentes, **caractérisé en ce que** la bande de serrage (30, 41) permet d'associer d'autres câbles ou tuyaux aux câbles ou tuyaux et de les serrer les uns avec les autres.
